# EUROPÄISCHE PATENTSCHRIFT

(11) **EP 0 668 650 B1**
(45) Veröffentlichungstag und Bekanntmachung des Hinweises auf die Patenterteilung: **12.08.1998**
(21) Anmeldenummer: 94120204.6
(22) Anmeldetag: 20.12.1994
(51) Int. Cl.: H02K 5/24, F04D 29/66

(54) **Anordnung zur schwingungsgedämpften Halterung eines Elektromotors**
Device for vibration-absorbing mount of a motor
Dispositif de fixation d'un moteur avec élément de support absorbant des vibrations

(30) Priorität: 22.02.1994 DE 4405577
(43) Veröffentlichungstag der Anmeldung: 23.08.1995
(73) Patentinhaber: ebm Werke GmbH & Co., 74673 Mulfingen (DE)
(72) Erfinder: Wagner, Martin, D-74653 Ingelfingen (DE); Matter, Walter, D-74238 Kerautheim (DE); Schmitt, Albert, D-74673 Ailringen (DE)
(74) Vertreter: Patentanwälte Dr. Solf & Zapf

(56) Entgegenhaltungen:
- FR-A- 2 160 215
- US-A- 3 941 339
- PATENT ABSTRACTS OF JAPAN vol. 017 no. 578 (E-1450), 20.Oktober 1993 & JP-A-05 168188 (MATSUSHITA ELECTRIC IND CO LTD) 2.Juli 1993

## Beschreibung

Die vorliegende Erfindung betrifft eine Anordnung zur schwingungsgedämpften Halterung eines Elektromotors an einem Träger über ein elastisches Dämpferelement. Diese Anordnung eignet sich vor allem zur Halterung eines Lüftermotors an einer als Träger fungierenden Lüftergehäusewandung.

Eine derartige schwingungsgedämpfte Halterung eines Elektromotors ist aus der DE-PS 35 00 867 bekannt, allerdings ist dort nicht die spezielle Verwendung zur Verbindung eines Lüftermotors mit einem Lüftergehäuse beschrieben. Bei der bekannten Halterung ist der Motor mit einem Haltewinkel fest verbunden, welcher seinerseits über ein gummielastisches Element mit einem Haltestreifen verbunden ist. Dieser Haltestreifen dient als Trag- oder Befestigungselement und weist hierzu zwei Schraubbolzen auf, über die der Haltestreifen - und damit der gesamte Motor - an einem Träger, d.h. an einem Rahmen oder einer sonstigen Trägerwand oder Halterung, befestigt werden kann. Bei dieser bekannten Halterungsanordnung ist nun nachteilig, daß das gummi-elastische Dämpferelement beidseitig, d.h. sowohl mit dem Haltestreifen als auch mit dem Haltewinkel, stoffschlüssig, und zwar durch Aufvulkanisieren oder Kleben, verbunden ist. Hieraus resultiert eine aufwendige und folglich mit hohen Kosten verbundene Herstellung der "Dämpfer-/Haltereinheit".

Die DE-PS 32 37 017 beschreibt eine Vibrations- und Dichtvorrichtung für ein Gebläse. Hierbei ist zwischen zwei rahmenförmigen Halteteilen eine elastische Membran eingeklebt. Auch dies führt zu einer aufwendigen Herstellung.

Bei einer weiteren, in der DE-PS 36 38 393 beschriebenen Anordnung zur schwingungsgedämpften Halterung eines Elektromotors sind mehrere (vier) einzelne Dämpfungselemente formschlüssig in einer Wandungsöffnung gehaltert und dabei zwischen dem Motor und einem fest mit diesem verbundenen Plattenelement eingespannt, wobei das Plattenelement derart gekröpft ist, daß es die Wandungsöffnung berührungslos durch- sowie hintergreift und auf der dem Motor abgekehrten Seite der Wandung an den Dämpfungselementen zu deren Einspannung anliegt. Die Verwendung mehrerer einzelner Dämpfungselemente hat gewisse Nachteile bezüglich der Montage.

Die DE-OS 2 215 473 beschreibt einen eigenschwingungsgedämpften, geräuscharmen Radiallüfter. Hierbei ist ein Motor mit einer Winkelschiene starr verbunden. Diese Winkelschiene ist mit einem Lüftergehäuse über mehrere Schwingungsdämpfer verbunden, wobei die Schwingungsdämpfer jeweils formschlüssig über Ringkerben in Öffnungen der Winkelschiene und des Lüftergehäuses gehaltert sind.

In einer Zusammenfassung der JP-A-5 168 188 gemäß Patent Abstracts of Japan, Vol. 017 No. 578 (E-1450) ist eine Anordnung zur Schwingungsisolation eines Lüftermotors beschrieben. Dabei soll zwischen einem kreisförmigen Teil eines Lüftergehäuses und einer Motor-Montageplatte ein vibrationsfestes Gummi (vibration-proof rubber) angeordnet sein. Dabei sind in dieser Zusammenfassung Schrauben erkennbar, die sich durch das vibrationsfeste Gummi, aber offensichtlich auch durch die Motor-Montageplatte sowie durch den kreisförmigen Teil des Lüftergehäuses erstrecken. Daher können über diese Schrauben in einem gewissen Umfang noch Schwingungen übertragen werden.

Der vorliegenden Erfindung liegt nun die Aufgabe zugrunde, die Anordnung der gattungsgemäßen Art so zu verbessern, daß bei geringem Herstellungsaufwand für die Halteteile eine einfache und schnelle Montage möglich ist, wobei auch eine besonders effektive Schwingungs- bzw. Geräuschdämpfung erreicht werden soll.

Erfindungsgemäß wird dies durch die Merkmale des Patentanspruchs 1 erreicht.

Erfindungsgemäß sind somit für die Verbindung zwischen dem Elektromotor und dem Träger, d.h. sowohl zwischen dem Motor und dem Dämpferelement als auch zwischen dem Dämpferelement und dem Träger, ausschließlich Schraubverbindungen vorgesehen, so daß die einzelnen Teile - vor allem durch Vermeidung von Stoffschlußverbindungen - einfach und preiswert herstellbar sind. Auch die Montage ist einfach und problemlos, und zwar insbesondere aufgrund der Verwendung eines einzelnen, zentrischen Dämpferelementes. Die Schraubverbindungen durchgreifen das Dämpferelement jeweils von der axial gegenüberliegenden Seite her, wobei dadurch, daß die Motor- und Träger-Schraubverbindungen jeweils in Umfangsrichtung versetzt angeordnet sind, eine sehr gute Schwingungsentkopplung erreicht wird. Hierdurch wird eine effektive Dämpfung von Schwingungen erreicht, die durch den Motor z.B. durch Reluktanzmomente, Kommutierungsgeräusche und dergleichen hervorgerufen werden, so daß eine Übertragung dieser Schwingungen auf den Träger bzw. auf das bevorzugt als Träger fungierende Lüftergehäuse vorteilhafterweise vermieden wird. Folglich wird auch einer schwingungsbedingten Geräuschentwicklung effektiv entgegengewirkt, denn Eigenschwingungen (Resonanzschwingungen) des Gehäuses sind durch die Dämpfung praktisch ausgeschlossen, weil eine Körperschallübertragung bereits ab einer Frequenz von ca. 800 Hz sehr stark reduziert wird. Dies ist ausreichend, um die über 1000 Hz liegenden, zu störenden Geräuschen führenden Gebläse-Gehäuseresonanzen nicht anzuregen.

Weiterhin ist erfindungsgemäß auf der dem Träger abgekehrten Seite des Dämpferelementes ein aus einem starren, formstabilen Material bestehender Flanschring angeordnet, der gemeinsam mit dem Dämpferelement über die Träger-Schraubverbindungen mit dem Träger derart verbunden ist, daß das scheibenförmige Dämpferelement zwischen dem Träger und dem Flanschring eingespannt angeordnet ist. Vorzugsweise ist hierbei das Dämpferelement in seinem äußeren Umfangsbereich und insbesondere über den gesamten Umfang hinweg zwischen dem Träger und dem Flanschring eingespannt, d.h. gerade auch in denjenigen Umfangsbereichen, in denen die Motor-Schraubverbindungen angeordnet sind. Hierdurch wird eine sehr stabile, aber dennoch effektiv schwingungsdämpfende Verbindung erreicht. Die Motor-Schraubverbindungen sind hierbei innerhalb des von dem Flanschring umschlossenen Flächenbereichs des scheibenförmigen Dämpferelementes angeordnet.

Die Motor-Schraubverbindungen können unmittelbar mit einem Motorflansch des Elektromotors verbunden sein. Alternativ hierzu kann es aber vorteilhaft sein, wenn die Motor-Schraubverbindungen mittelbar über einen Zwischenflansch mit dem Elektromotor verbunden sind, wobei jede Schraubverbindung vorzugsweise in eine Gewindebohrung des Zwischenflansches eingreift, und wobei der Zwischenflansch seinerseits über zusätzliche Schraubverbinderelemente mit dem Motor verbunden ist. Durch diesen Zwischenflansch ist eine sehr einfache Anpassung an verschiedene Motor-Ausführungen möglich, und zwar durch unterschiedliche Lochungen für die zusätzlichen Schraubverbinderelemente. Die für die Motor-Schraubverbindungen mit dem elastischen Dämpferelement vorgesehenen Lochungen des Zwischenflansches können hierbei stets gleich ausgebildet bzw. angeordnet sein.

Weitere vorteilhafte Ausgestaltungsmerkmale sind in den Unteransprüchen sowie der folgenden Beschreibung enthalten.

Anhand der Zeichnung soll im folgenden die Erfindung beispielhaft näher erläutert werden. Dabei zeigen:
- Fig. 1: einen Axialschnitt durch einen Lüfter, dessen Elektromotor mit dem Lüftergehäuse über eine erfindungsgemäße Halterungsanordnung verbunden ist,
- Fig. 2: eine Ansicht analog zu Fig. 1 in einer Ausführungsvariante,
- Fig. 3: eine Draufsicht des Dämpferelementes von der Motorseite her,
- Fig. 4: einen Schnitt durch das Dämpferelement längs der Schnittlinie IV-IV in Fig. 3 (Schnittführung entspricht den Darstellungen in Fig. 1 und 2),
- Fig. 5: eine Draufsicht des Dämpferelementes von der Trägerseite her, d.h. in Pfeilrichtung V gemäß Fig. 4,
- Fig. 6: eine Draufsicht eines bevorzugt vorgesehenen Flanschringes von der Motorseite her,
- Fig. 7: einen Schnitt durch den Flanschring längs der Linie VII-VII in Fig. 6,
- Fig. 8: eine Draufsicht auf einen bevorzugt vorgesehenen Zwischenflansch ebenfalls von der Motorseite her und
- Fig. 9: einen Schnitt durch den Zwischenflansch längs der Linie IX-IX in Fig. 8.

In den verschiedenen Figuren der Zeichnung sind gleiche Teile stets mit den gleichen Bezugszeichen versehen, so daß jede eventuell nur einmal unter Bezugnahme auf eine der Zeichnungsfiguren vorkommende Beschreibung eines Teils analog auch bezüglich der anderen Zeichnungsfiguren gilt, in denen dieses Teil mit dem entsprechenden Bezugszeichen ebenfalls zu erkennen ist.

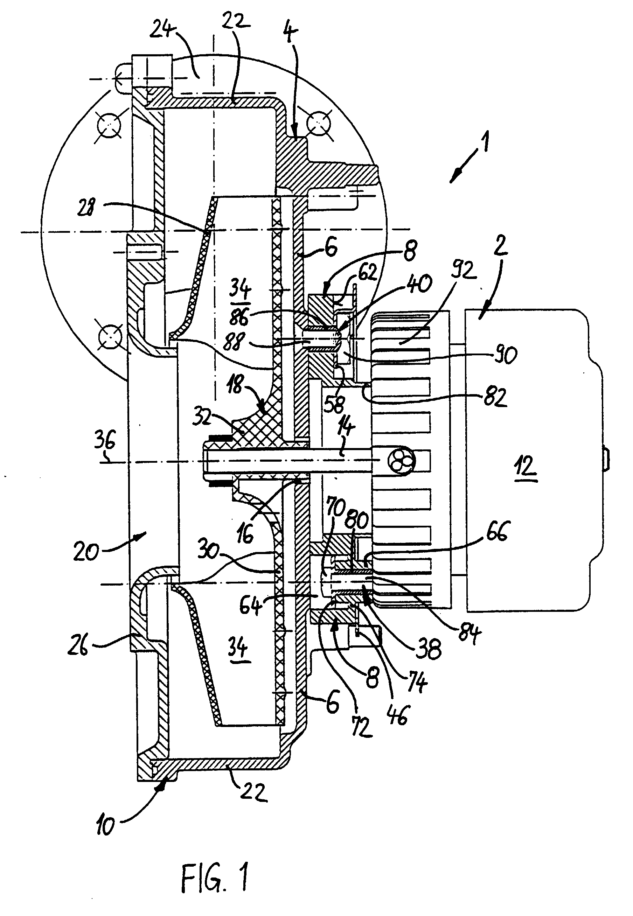

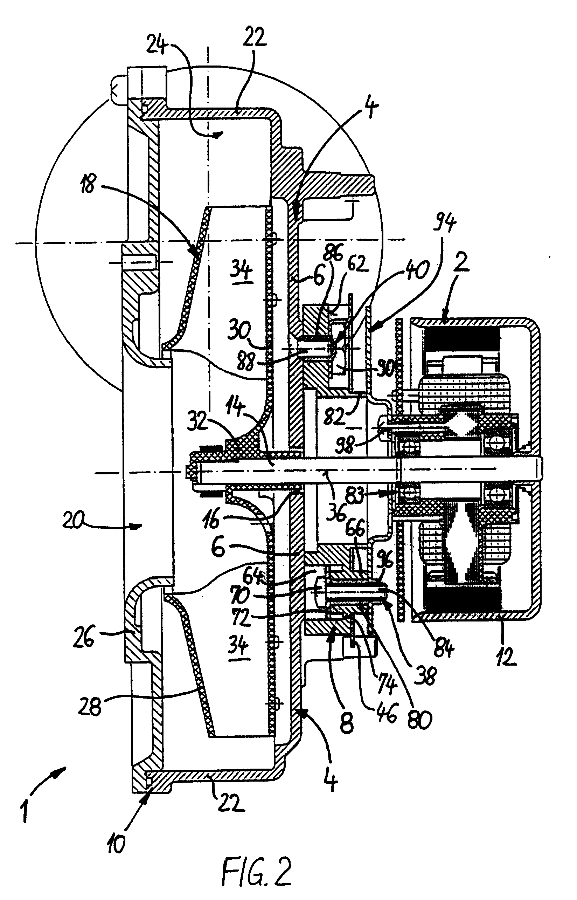

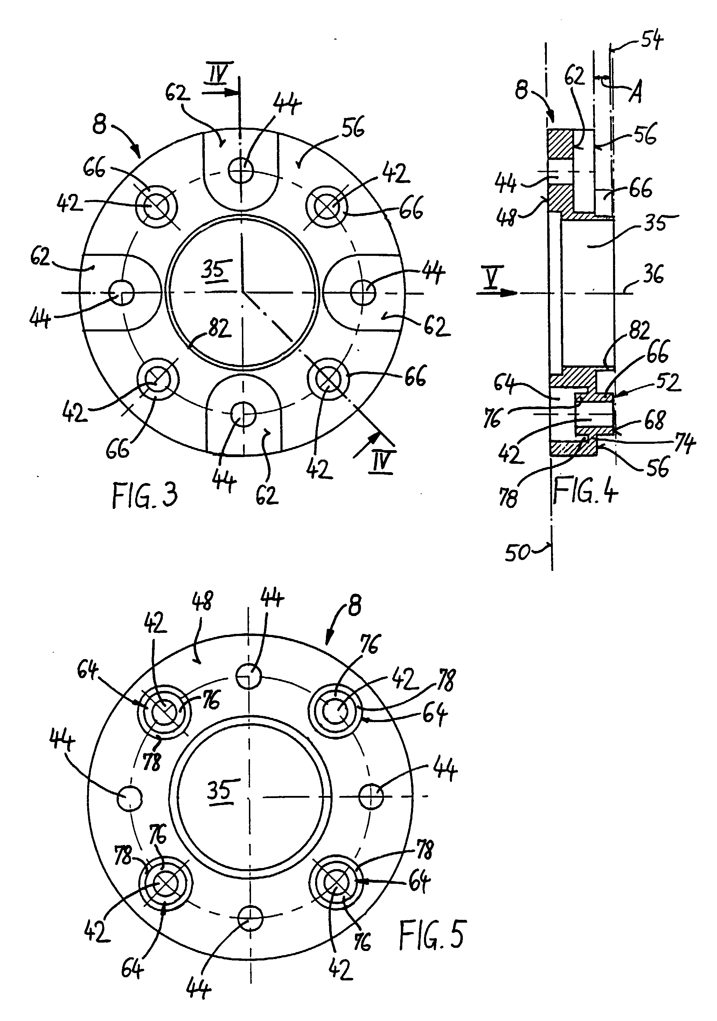

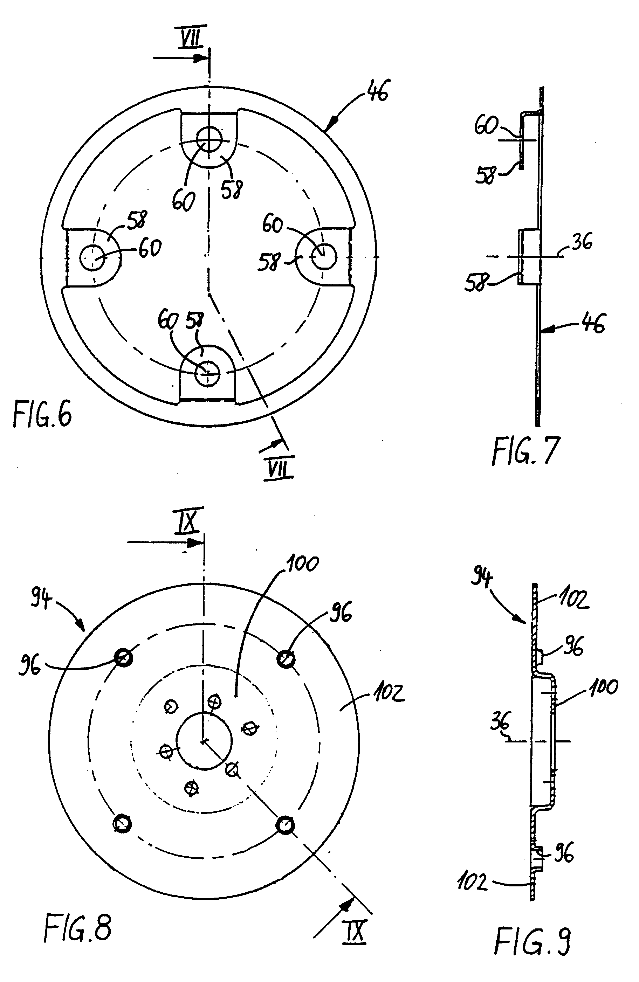

Die erfindungsgemäße Halterungsanordnung wird im folgenden - ohne die Erfindung jedoch hierauf zu beschränken - am Beispiel eines Lüfters bzw. Gebläses 1 (Fig. 1 und 2) erläutert, wobei ein Elektromotor 2 an einer als Träger 4 fungierenden Lüftergehäusewandung 6 über ein aus einem elastischen Material bestehendes Dämpferelement 8 (siehe hierzu auch Fig. 3 bis 5) befestigt ist.

Im dargestellten Ausführungsbeispiel ist der Lüfter 1 als Radialgebläse ausgebildet und besteht aus dem Elektromotor 2 und einem Lüftergehäuse 10, wobei der Elektromotor bevorzugt als Außenläufermotor ausgeführt ist, dessen Außenläufer 12 mit einer verlängerten Motorwelle 14 verbunden ist, die sich durch eine Öffnung 16 in der Lüftergehäusewandung 6 erstreckt und dort mit einem innerhalb des Lüftergehäuses 10 angeordneten Laufrad 18 verbunden ist. Das Lüftergehäuse 10 besteht bevorzugt aus Aluminiumdruckguß und weist einen der motorseitigen Gehäusewandung 6 axial gegenüberliegenden Lufteinlaß 20 sowie im Bereich der Mantelwandung 22 des in radialer Richtung spiralförmig ausgeführten Gehäuses 10 einen Luftauslaß 24 auf. Zur Montage des Laufrades 18 ist das Gehäuse 10 zweiteilig ausgebildet, und zwar einerseits aus einem einstückig aus der motorseitigen Gehäusewandung 6 und der Mantelwandung 22 bestehenden Gehäuseteil und andererseits einem den Lufteinlaß 20 aufweisenden deckelartigen Gehäuseteil 26. Der Lufteinlaß 20 ist im dargestellten Beispiel düsenförmig ausgebildet und wird von einer vorderen Deckscheibe 28 des Laufrades 18 axial übergriffen. Eine hintere Deckscheibe 30 des Laufrades 18 weist eine zentrische Nabe 32 auf, die mittels nicht näher dargestellter Verbindungselemente auf dem freien Ende der Motorwelle 14 befestigt ist. Zwischen den Deckscheiben 28, 30 sind Schaufeln 34 des Laufrades 18 angeordnet, wobei diese Schaufeln je nach Anwendungsfall vorwärts oder rückwärts gekrümmt ausgeführt sein können.

Erfindungsgemäß ist nun das Dämpferelement 8 im wesentlichen scheibenförmig, und zwar vorzugsweise kreisscheibenförmig mit einer zentrischen Öffnung 35 zum Durchführen der Motorwelle 14, ausgebildet und hierbei bezüglich der Motorachse 36 zentrisch bzw. koaxial angeordnet. Hierbei ist das Dämpferelement 8 einerseits mit dem Elektromotor 2 über vorzugsweise vier über den Scheibenumfang gleichmäßig verteilt angeordnete, das Dämpferelement 8 durchgreifende Motor-Schraubverbindungen 38 sowie andererseits mit dem Träger 4 bzw. mit der Lüftergehäusewandung 6 über jeweils in Umfangsrichtung zwischen den Motor-Schraubverbindungen 38 angeordnete, das Dämpferelement 8 ebenfalls durchgreifende Träger-Schraubverbindungen 40 verbunden. Wie dargestellt, sind bevorzugt auch vier Träger-Schraubverbindungen 40 vorgesehen, die jeweils mittig zwischen den Motor-Schraubverbindungen 38 angeordnet sind. Demzufolge sind die einzelnen Motor-Schraubverbindungen 38 jeweils in Umfangsrichtung um 90° voneinander beabstandet, was entsprechend auch für die Träger-Schraubverbindungen 40 gilt; jede Träger-Schraubverbindung 40 ist somit von den in Umfangsrichtung benachbarten Motor-Schraubverbindungen 38 um einen Winkel von 45° beabstandet. Dies ist anhand der Fig. 3 und 5 leicht nachvollziehbar, und zwar durch dort erkennbare Durchgangslöcher 42,44, wobei vorzugsweise vier Durchgangslöcher 42 für die Motor-Schraubverbindungen 38 vorgesehen sind sowie vorzugsweise vier Durchgangslöcher 44 für die Träger-Schraubverbindungen 40.

Es ist besonders vorteilhaft, wenn auf der dem Träger 4 abgekehrten Seite des Dämpferelementes 8 ein Flanschring 46 (vgl. hierzu Fig. 6 und 7) angeordnet ist. Dieser Flanschring 46 besteht aus einem starren, formstabilen Material, insbesondere Stahlblech, und ist gemeinsam mit dem Dämpferelement 8 über die Träger-Schraubverbindungen 40 mit dem Träger 4 bzw. der Gehäusewandung 6 derart verbunden, daß das scheibenförmige Dämpferelement 8 zwischen der Gehäusewandung 6 und dem Flanschring 46 über den gesamten Umfang hinweg eingespannt ist. Vorzugsweise hat der Flanschring 46 einen solchen Durchmesser, daß das Dämpferelement 8 in seinem äußeren Umfangsbereich eingespannt wird. Diese Einspannung erstreckt sich somit auch in Umfangsrichtung über die Bereiche des Dämpferelementes 8, in denen die Motor-Schraubverbindungen 38 angeordnet sind. Hierdurch wird eine gute mechanische Stabilität erreicht, da den vom Motor 2 ausgehenden Kräften, die über die Motor-Schraubverbindungen 38 auf das Dämpferelement 8 wirken, durch den Flanschring 46 entgegengewirkt wird. Dennoch wird eine effektive Schwingungsentkopplung erreicht, weil die Motor-Schraubverbindungen 38 gegenüber dem Flanschring 46 radial nach innen versetzt angeordnet sind.

Im folgenden soll nun anhand der Fig. 3 bis 5 die konstruktive Ausgestaltung des Dämpferelementes 8 und im Zusammenhang damit anhand der Fig. 6 und 7 der Aufbau des Flanschringes 46 genauer erläutert werden.

Auf seiner dem Träger 4 bzw. der Gehäusewandung 6 zugekehrten Seite weist das Dämpferelement 8 eine im wesentlichen ebene Oberfläche 48 auf, die eine Träger-Anlageebene 50 definiert (siehe Fig. 4). Auf der gegenüberliegenden, dem Elektromotor 2 zugekehrten Seite weist das Dämpferelement 8 Flächenbereiche 52 auf, die gemeinsam eine Motor-Verbindungsebene 54 definieren. Ferner weist das Dämpferelement 8 für den Flanschring 46 eine Anlageebene 56 auf, die erfindungsgemäß gegenüber der Motor-Verbindungsebene 54 in Richtung der Trägerseite um einen axialen Abstand A versetzt ist. Hierdurch wird auch ein axialer Abstand zwischen den motorseitigen Teilen und den trägerseitig befestigten Teilen erreicht, und damit eine Schwingungsentkopplung.

Gemäß Fig. 6 und 7 weist der Flanschring 46 für jede Träger-Schraubverbindung 40 eine radial nach innen gerichtete Befestigungslasche 58 auf, wobei jede Befestigungslasche 58 ein mit dem entsprechenden Durchlangsloch 44 des Dämpferelementes 8 fluchtendes Durchgangsloch 60 für die jeweilige Träger-Schraubverbindung 40 aufweist. Hierbei ist es besonders vorteilhaft, wenn das Dämpferelement 8 - siehe Fig. 3 und 4 - für jede Befestigungslasche 58 des Flanschringes 46 eine sich ausgehend von der Anlageebene 56 für den Flanschring 46 in Richtung der Trägerseite in das Dämpferelement 8 erstreckende Aufnahmevertiefung 62 aufweist, wobei dann jede Befestigungslasche 58 des Flanschringes 46 aus der Ringebene bzw. Anlageebene 56 in Richtung der Trägerseite in die Ebene der Aufnahmevertiefung 62 abgekröpft ist (siehe hierzu Fig. 1, 2 und 7). Durch diese Maßnahme werden vorteilhafterweise Aufnahmeräume für Kopfteile der Träger-Schraubverbindungen 40 geschaffen; dies wird im folgenden noch erläutert werden.

Wie sich weiterhin aus Fig. 3 bis 5 ergibt, weist das Dämpferelement 8 im Bereich jedes der für die Motor-Schraubverbindungen 38 vorgesehenen Durchgangslöcher 42 einerseits auf der dem Träger 4 zugekehrten Seite eine axiale Vertiefung 64 sowie andererseits auf der dem Elektromotor 2 zugekehrten Seite einen das Durchgangsloch 42 umschließenden, hohlzylindrischen Hülsenansatz 66 auf. Hierbei bilden die Hülsenansätz 66 mit ihren dem Motor 2 zugekehrten Stirnringflächen 68 die oben erwähnten, die Motor-Verbindungsebene 54 definierenden Flächenbereiche 52. Die Hülsenansätze 66 gehen insbesondere von der Anlageebene 56 für den Flanschring 46 aus (siehe hierzu insbesondere Fig. 4). Die trägerseitigen Vertiefungen 64 dienen zur versenkten Aufnahme von Teilen der Motor-Schraubverbindungen 38, und zwar - gemäß Fig. 1 und 2 - ist in jeder Vertiefung 64 ein Schraubenkopf 70 und vorzugsweise eine Unterlegscheibe 72 angeordnet. Vorzugsweise besitzt jeder der trägerseitigen Vertiefungen 64 einen lichten Innendurchmesser, der derart größer als der Außendurchmesser des zugehörigen motorseitigen Hülsenansatzes 66 ist, daß der Hülsenansatz 66 über einen ringscheibenförmigen und damit membranartigen Verbindungssteg 74 einstückig mit dem übrigen Dämpferelement 8 verbunden ist (siehe Fig. 4). Hierdurch wird eine sehr gute Elastizität und damit eine gute Dämpfungsentkopplung erreicht. Im Zusammenhang damit ist es vorteilhaft, wenn innerhalb jeder trägerseitigen Vertiefung 64 - siehe auch hierzu Fig. 4 - ein sich ausgehend von dem membranartigen Verbindungssteg 74 in Richtung der Trägerseite erstreckender, vorzugsweise in axialer Richtung mit dem ersten, motorseitigen Hülsenansatz 66 fluchtender, zweiter Hülsenansatz 76 gebildet ist, wobei zwischen der Vertiefung 64 und dem zweiten Hülsenansatz 76 eine umlaufende Rillenvertiefung 78 gebildet ist. Somit bilden der erste und zweite Hülsenansatz 66, 76 praktisch gemeinsam einen Hohlzylinder, der in seinem etwa mittigen Bereich über den membranartigen Verbindungssteg 74 schwingungsdämpfend "aufgehängt" ist. Wie sich nun aus Fig. 1 und 2 ergibt, ist in jedem Durchgangsloch 42 für die jeweilige Motor-Schraubverbindung 38 ein formstabiler Hülseneinsatz 80 angeordnet, der durch seine axiale Länge ein definiertes, vom elastischen Verformungsverhalten des Dämpferelementes 8 unabhängiges Schrauben-Anzugsmoment ermöglicht. Die Länge des Hülseneinsatzes 80 entspricht im wesentlichen der Länge des von den Hülsenansätzen 66, 76 gebildeten Hohlzylinders.

Aus der bisherigen Beschreibung wird deutlich, daß sich der Elektromotor 2 hauptsächlich über die Hülsenansätze 66 an dem Dämpferelement 8 abstützt. Zusätzlich hierzu kann es aber vorteilhaft sein, wenn das Dämpferelement 8 auf seiner dem Elektromotor 2 zugekehrten Seite einen die zentrische Öffnung 35 umschließenden, ringförmigen Anlagesteg 82 zur zusätzlichen motorseitigen Abstützung aufweist. Hierbei liegt dieser Anlagesteg 82 mit seiner Stirnringfläche vorzugsweise mit Vorspannung motorseitig an, wozu - im demontierten, entspannten Zustand des Dämpferelementes 8 (vgl. Fig. 4) - der ringförmige Anlagesteg 82 geringfügig "länger" als die Hülsenansätze 66 ausgebildet ist. Vorteilhafterweise hat der Anlagesteg 82 auch die Funktion einer Dichtlippe, die ein Eindringen von Feuchtigkeit, Schmutz und sonstigen Fremdstoffen in den Bereich der Motorwelle 14 und der Lagermittel 83 verhindert (vgl. insbesondere Fig. 2).

Wie oben bereits angedeutet, besteht jede Motor-Schraubverbindung 38 aus einer Schraube 84, deren Kopf 70 vorzugsweise mit einer Unterlegscheibe 72 innerhalb einer der trägerseitigen Vertiefungen 64 des Dämpferelementes 8 angeordnet ist (Fig. 1 und 2). Jede Träger-Schraubverbindung 40 besteht bevorzugt aus einer Innengewindehülse 86 und einer in diese eingreifenden Schraube 88, wobei vorzugsweise die Innengewindehülse 86 von der Motorseite her in die fluchtenden Durchgangslöcher 60 und 44 des Flanschringes 46 und des Dämpferelementes 8 eingesteckt und dabei vorteilhafterweise im Dämpferelement 8 kraftschlüssig gehaltert sowie mit einem Kopf 90 gegen Verdrehen gesichert am Flanschring 46, und zwar insbesondere im Bereich der Kröpfung der Befestigungslasche 58, abgestützt ist. Die Schraube 88 ist insbesondere als Senkkopfschraube ausgebildet und durchgreift hierbei eine trägerseitige Öffnung und ist mit der Innengewindehülse 86 verschraubt. Der Kopf 90 der Innengewindehülse 86 sitzt dabei innerhalb der Aufnahmevertiefung 62 des Dämpferelementes 8 bzw. im abgekröpften Bereich der Befestigungslasche 58, so daß jedenfalls ein ausreichender axialer Abstand zu den motorseitigen Teilen gewährleistet ist.

In Fig. 1 ist nun eine erste Ausführungsform veranschaulicht, bei der die Motor-Schraubverbindungen 38 unmittelbar mit einem Motorflansch 92 des Elektromotors 2 verbunden sind. Dabei greift jede Schraubverbindung 38 vorzugsweise direkt in eine nicht erkennbare Gewindebohrung des Motor-flansches 92 ein.

Bei der in Fig. 2 veranschaulichten Ausführungsvariante sind die Motor-Schraubverbindungen 38 mittelbar über einen Zwischenflansch 94 mit dem Elektromotor 2 verbunden, wobei jede Schraubverbindung 38 bzw. jede Schraube 84 vorzugsweise direkt in eine Gewindebohrung 96 des Zwischenflansches 94 eingreift, und wobei der Zwischenflansch 94 über zusätzliche Schraubverbinderelemente 98 mit dem Motor 2 verbunden ist. Der Zwischenflansch 94 ist gesondert in Fig. 8 und 9 dargestellt. Daraus ist zu erkennen, daß der Zwischenflansch 94 kreisscheibenförmig mit einer zentrischen, in Richtung des Elektromotors 2 weisenden, vorzugsweise ebenfalls kreisförmigen Sickenausprägung 100 ausgebildet ist, in deren Bereich der Elektromotor 2 über die zusätzlichen Schraubverbinderelemente 98 mit dem Zwischenflansch 94 verbunden ist. Die eigentlichen Motor-Schraubverbindungen 38 liegen hierbei in einem die Sickenausprägung 100 umschließenden, ebenen Scheibenbereich 102. Die Anordnung der Motorschraubverbindungen 38 kann hierbei stets gleich sein; zur Anpassung an verschiedene Motorenarten bzw. -größen ist der Zwischenflansch im Bereich der Sickenausprägung 100 mit unterschiedlichen Lochungen versehen, die eine Befestigung verschiedener Motoren gestatten.

Das Dämpferelement 8 besteht aus einem relativ weichen, elastischen Material mit einer Shore-Härte von etwa 35. Als Material für das Dämpferelement 8 ist insbesondere Silikon bzw. eine Silikon-Verbindung geeignet. Das Dämpferelement 8 kann auf einfache und wirtschaftliche Weise als einstückiges Formteil (Spritzgußteil) hergestellt werden.

Im folgenden soll noch kurz am Beispiel des Lüfters die Montage der Einzelteile erläutert werden.

Zunächst wird das Dämpferelement 8 vorzugsweise mit dem Flanschring 46 zusammengefügt, indem die Befestigungslaschen 58 in die Aufnahmevertiefungen 62 eingelegt werden. Nun werden die Innengewindehülsen 86 jeweils durch das Durchgangsloch 60 des Flanschringes 46 in das Durchgangsloch 44 des Dämpferelementes 8 eingesteckt, wobei der Kopf 90 sich in einer Drehungen verhindernden Weise am Flanschring 46 abstützt. Nun werden die Hülseneinsätze 80 in die Durchgangslocher 42 eingeschoben, wodurch eine Verformung des Dämpferelementes 8 in diesem Bereich verhindert wird, indem die Hülseneinsätze 80 aus einem formstabilen Material, vorzugsweise aus Stahl oder Messing, bestehen. Nun erfolgt die Befestigung des Dämpferelementes 8 am Elektromotor 2 mittels der die Hülseneinsätze 80 durchgreifenden Schrauben 84. Schließlich erfolgt die Befestigung dieser vormontierten Einheit an der Gehäusewandung 6. Hierzu wird die Motorwelle 14 durch die Öffnung 16 in das Innere des Lüftergehäuses 10 geführt. Die Schrauben 88 werden dann vom Inneren des Lüfters her durch die entsprechenden Öffnungen der Wandung 6 mit den Innengewindehülsen 86 verschraubt. Nachfolgend kann dann in bekannter Weise die Befestigung des Laufrades 18 auf der Motorwelle 14 erfolgen, wonach dann das Lüftergehäuse durch das deckelartige Gehäuseteil 26 verschlossen wird.

## Patentansprüche

1. Anordnung zur schwingungsgedämpften Halterung eines Elektromotors (2) an einem Träger (4) über ein elastisches Dämpferelement (8), wobei das Dämpferelement (8) im wesentlichen scheibenförmig ausgebildet und - bezüglich der Motorachse (36) - zentrisch angeordnet ist sowie einerseits mit dem Elektromotor (2) über mindestens drei über den Scheibenumfang verteilt angeordnete, das Dämpferelement (8) durchgreifende Motor-Schraubverbindungen (38) und andererseits mit dem Träger (4) über jeweils in Umfangsrichtung zwischen den Motor-Schraubverbindungen (38) angeordnete, das Dämpferelement (8) durchgreifende Träger-Schraubverbindungen (40) verbunden ist, wobei auf der dem Träger (4) abgekehrten Seite des Dämpferelementes (8) ein aus einem starren, formstabilen Material bestehender Flanschring (46) angeordnet ist, der gemeinsam mit dem Dämpferelement (8) über die Träger-Schraubverbindungen (40) mit dem Träger (4) derart verbunden ist, daß das scheibenförmige Dämpferelement (8) zwischen dem Träger (4) und dem Flanschring (46) eingespannt angeordnet ist.

2. Anordnung nach Anspruch 1, wobei
der Elektromotor (2) ein Lüftermotor ist und der Träger (4) von einer Lüftergehäusewandung (6) gebildet ist.

3. Anordnung nach Anspruch 1 oder 2, wobei
das Dämpferelement (8) in seinem äußeren Umfangsbereich und vorzugsweise über den gesamten Umfang hinweg zwischen dem Träger (4) und dem Flanschring (46) eingespannt angeordnet ist.

4. Anordnung nach einem der Ansprüche 1 bis 3, wobei
das Dämpferelement (8) auf seiner dem Träger (4) zugekehrten Seite eine eine Träger-Anlageebene (50) definierende Oberfläche (48) aufweist.

5. Anordnung nach einem der Ansprüche 1 bis 4, wobei
das Dämpferelement (8) auf seiner dem Elektromotor (2) zugekehrten Seite Flächenbereiche (52) aufweist, die eine Motor-Verbindungsebene (54) definieren.

6. Anordnung nach einem der Ansprüche 1 bis 5, wobei
das Dämpferelement (8) für den Flanschring (46) eine Anlageebene (56) aufweist, die gegenüber der Motor-Verbindungsebene (54) in Richtung der Trägerseite um einen axialen Abstand (A) versetzt ist.

7. Anordnung nach einem der Ansprüche 1 bis 6, wobei
der Flanschring (46) im Bereich jeder Träger-Schraubverbindung (40) eine radial nach innen gerichtete Befestigungslasche (58) aufweist, wobei die Befestigungslaschen (58) und das Dämpferelement (8) fluchtende Durchgangslöcher (60, 44) für die Träger-Schraubverbindungen (40) aufweisen.

8. Anordnung nach Anspruch 7, wobei
das Dämpferelement (8) für jede Befestigungslasche (58) des Flanschringes (46) eine Aufnahmevertiefung (62) aufweist, wobei jede Befestigungslasche (58) aus der Anlageebene (56) des Flanschringes (46) in Richtung der Trägerseite in die Ebene der Aufnahmevertiefung (62) abgekröpft ist.

9. Anordnung nach einem der Ansprüche 1 bis 8, wobei
das Dämpferelement (8) für jede Motor-Schraubverbindung (38) ein Durchgangsloch (42) aufweist sowie im Bereich jedes Durchgangsloches (42) einerseits auf der dem Träger (4) zugekehrten Seite eine axiale Vertiefung (64) sowie andererseits auf der dem Elektromotor (2) zugekehrten Seite einen das Durchgangsloch (42) umschließenden hohlzylindrischen Hülsenansatz (66), wobei die Hülsenansätze (66) mit ihren Stirnringflächen (68) die Motor-Verbindungsebene (54) definieren.

10. Anordnung nach Anspruch 9, wobei
jede der trägerseitigen Vertiefungen (64) einen lichten Innenquerschnitt aufweist, der derart größer als der Außenquerschnitt des zugehörigen motorseitigen Hülsenansatzes (66) ist, daß der Hülsenansatz (66) über einen membranartigen Verbindungssteg (74) mit dem übrigen Dämpferelement (8) verbunden ist.

11. Anordnung nach Anspruch 10, wobei
innerhalb jeder trägerseitigen Vertiefung (64) ein sich ausgehend von dem membranartigen Verbindungssteg (74) in Richtung der Trägerseite erstreckender, vorzugsweise in axialer Richtung mit dem ersten, motorseitigen Hülsenansatz (66) fluchtender, zweiter Hülsenansatz (76) gebildet ist, wobei zwischen der Vertiefung (64) und dem zweiten Hülsenansatz (76) eine umlaufende Rillenvertiefung (78) gebildet ist.

12. Anordnung nach einem der Ansprüche 1 bis 11, wobei
in den Durchgangslöchern (42) für die Motor-Schraubverbindungen (38) jeweils ein formstabiler Hülseneinsatz (80) angeordnet ist.

13. Anordnung nach einem der Ansprüche 1 bis 12, wobei
das Dämpferelement (8) auf seiner dem Elektromotor (2) zugekehrten Seite einen ringförmigen, die Motorachse (36) konzentrisch umschließenden Anlagesteg (82) zur motorseitigen Abstützung aufweist.

14. Anordnung nach einem der Ansprüche 1 bis 13, wobei
das Dämpferelement (8) kreisscheibenförmig ausgebildet ist und eine zentrische, insbesondere kreisförmige Öffnung (35) zum Durchführen einer Motorwelle (14) aufweist.

15. Anordnung nach einem der Ansprüche 1 bis 14, wobei
vier Motor-Schraubverbindungen (38) in einer in Umfangsrichtung gleichmäßigen Verteilung vorgesehen sind.

16. Anordnung nach einem der Ansprüche 1 bis 15, wobei
vier Träger-Schraubverbindungen (40) in einer in Umfangsrichtung gleichmäßigen Verteilung vorgesehen sind, wobei vorzugsweise jede Träger-Schraubverbindung (40) in Umfangsrichtung gesehen mittig zwischen zwei Motor-Schraubverbindungen (38) angeordnet ist.

17. Anordnung nach einem der Ansprüche 1 bis 16, wobei
jede Motor-Schraubverbindung (38) aus einer Schraube (84) besteht, deren Kopf (70) vorzugsweise mit einer Unterlegscheibe (72) innerhalb einer der trägerseitigen Vertiefungen (64) des Dämpferelementes (8) angeordnet ist.

18. Anordnung nach einem der Ansprüche 1 bis 17, wobei
jede Träger-Schraubverbindung (40) aus einer Innengewindehülse (86) und einer in diese eingreifenden Schraube (88) besteht, wobei vorzugsweise die Innengewindehülse (86) von der Motorseite her in die fluchtenden Durchgangslöcher (60, 44) des Flanschringes (46) und des Dämpferelementes (8) eingesteckt und mit einem Kopf (90) gegen Verdrehen gesichert am Flanschring (46) abgestützt ist und die Schraube (88) eine trägerseitige Öffnung durchgreifend mit der Innengewindehülse (86) verschraubt ist.

19. Anordnung nach einem der Ansprüche 1 bis 18, wobei
die Motor-Schraubverbindungen (38) unmittelbar mit einem Motorflansch (92) des Elektromotors (2) verbunden sind, wobei jede Schraubverbindung (38) insbesondere in eine Gewindebohrung des Motorflansches (92) eingreift.

20. Anordnung nach einem der Ansprüche 1 bis 18, wobei
die Motor-Schraubverbindungen (38) mittelbar über einen Zwischenflansch (94) mit dem Elektromotor (2) verbunden sind, wobei jede Schraubverbindung (38) insbesondere in eine Gewindebohrung (96) des Zwischenflansches (94) eingreift, und wobei der Zwischenflansch (94) über zusätzliche Schraubverbinderelemente (98) mit dem Motor (2) verbunden ist.

21. Anordnung nach Anspruch 20, wobei
der Zwischenflansch (94) scheibenförmig mit einer zentrischen, in Richtung des Elektromotors (2) weisenden Sickenausprägung (100) ausgebildet ist, in deren Bereich der Elektromotor (2) über die zusätzlichen Schraubverbinderelemente (98) mit dem Zwischenflansch (94) verbunden ist.

22. Anordnung nach einem der Ansprüche 1 bis 21, wobei
das Dämpferelement (8) aus einem Material mit einer Shore-Härte von etwa 35, und zwar insbesondere aus Silikon oder einer Silikon-Verbindung, besteht.

## Claims

1. Arrangement for the vibration-damped mounting of an electric motor (2) on a support (4) via an elastic damper element (8), the damper element (8) essentially being of disc-shaped design and - with respect to the motor axis (36) - being arranged centrally, and being connected, on the one hand, to the electric motor (2) via at least three motor screw connections (38), which are distributed over the circumference of the disc and reach through the damper element (8), and, on the other hand, to the support (4) via support screw connections (40), which are in each case arranged in the circumferential direction between the motor screw connections (38) and reach through the damper element (8), a flange ring (46) being arranged on that side of the damper element (8) which is remote from the support (4), which flange ring consists of a rigid, dimensionally stable material and together with the damper element (8) is connected to the support (4), via the support screw connections (40), in such a manner that the disc-shaped damper element (8) is arranged clamped between the support (4) and the flange ring (46).

2. Arrangement according to Claim 1, the electric motor (2) being a fan motor and the support (4) being formed by a fan-housing wall (6).

3. Arrangement according to Claim 1 or 2, the outer circumferential region, and preferably the entire circumference, of the damper element (8) being arranged clamped between the support (4) and the flange ring (46).

4. Arrangement according to one of Claims 1 to 3, the damper element (8), having on its side which faces the support (4), a surface (48) defining a support bearing plane (50).

5. Arrangement according to one of Claims 1 to 4, the damper element (8) having, on its side which faces the electric motor (2), surface regions (52) which define a motor connecting plane (54).

6. Arrangement according to one of Claims 1 to 5, the damper element (8) having a bearing plane (56) for the flange ring (46), which bearing plane is offset with respect to the motor connecting plane (54) by an axial distance (A) towards the support side.

7. Arrangement according to one of Claims 1 to 6, the flange ring (46) having a radially inwardly directed fastening tab (58) in the region of each support screw connection (40), the fastening tabs (58) and the damper element (8) having aligning through-holes (60, 44) for the support screw connections (40).

8. Arrangement according to Claim 7, the damper element (8) having a receiving depression (62) for each fastening tab (58) of the flange ring (46), each fastening tab (58) being bent at right angles out of the bearing plane (56) of the flange ring (46) towards the support side into the plane of the receiving depression (62).

9. Arrangement according to one of Claims 1 to 8, the damper element (8) having a through-hole (42) for each motor screw connection (38), and also having, in the region of each through-hole (42), an axial depression (64) on that side which faces the support (4), on the one hand, and, on the other hand, on that side which faces the electric motor (2) a hollow-cylindrical sleeve projection (66) which surrounds the through-hole (42), the sleeve projections (66) defining with their annular end surfaces (68) the motor connecting plane (54).

10. Arrangement according to Claim 9, each of the depressions (64) on the support having a clear internal cross-section which is larger than the external cross-section of the associated sleeve projection (66) on the motor such that the sleeve projection (66) is connected to the rest of the damper element (8) via a membrane-like connecting web (74).

11. Arrangement according to Claim 10, a second sleeve projection (76) being formed within each depression (64) on the support, which second sleeve projection extends from the membrane-like connecting web (74) towards the support and is preferably aligned in the axial direction with the first sleeve projection (66) on the motor, a peripheral grooved depression (78) being formed between the depression (64) and the second sleeve projection (76).

12. Arrangement according to one of Claims 1 to 11, a dimensionally stable sleeve insert (80) being arranged in each of the through-holes (42) for the motor screw connections (38).

13. Arrangement according to one of Claims 1 to 12, the damper element (8) having, on its side which faces the electric motor (2), an annular bearing web (82) which concentrically surrounds the motor axis (36) and is intended to give support on the motor side.

14. Arrangement according to one of Claims 1 to 13, the damper element (8) being of circular disc-shaped design and having a central, in particular circular opening (35) for the passing through of a motor shaft (14).

15. Arrangement according to one of Claims 1 to 14, four motor screw connections (38) being provided in a uniform distribution in the circumferential direction.

16. Arrangement according to one of Claims 1 to 15, four support screw connections (40) being provided in a uniform distribution in the circumferential direction, each support screw connection (40) preferably being arranged in the centre, viewed in the circumferential direction, between two motor screw connections (38).

17. Arrangement according to one of Claims 1 to 16, each motor screw connection (38) consisting of a screw (84), the head (70) of which is preferably arranged, together with a washer (72), within one of those depressions (64) of the damper element (8) on the support side.

18. Arrangement according to one of Claims 1 to 17, each support screw connection (40) consisting of an internally threaded sleeve (86) and a screw (88) engaging therein, the internally threaded sleeve (86) preferably being inserted from the motor side into the aligning through-holes (60, 44) of the flange ring (46) and of the damper element (8) and being supported, in a manner such that it is secured against rotation, on the flange ring (46) by a head (90), and the screw (88), reaching through an opening on the support, being screwed to the internally threaded sleeve (86).

19. Arrangement according to one of Claims 1 to 18, the motor screw connections (38) being directly connected to a motor flange (92) of the electric motor (2), each screw connection (38) in particular engaging into a threaded bore of the motor flange (92).

20. Arrangement according to one of Claims 1 to 18, the motor screw connections (38) being indirectly connected, via an intermediate flange (94), to the electric motor (2), each screw connection (38) in particular engaging into a threaded bore (96) of the intermediate flange (94), and the intermediate flange (94) being connected to the motor (2) via additional screw-connector elements (98).

21. Arrangement according to Claim 20, the intermediate flange (94) being of disc-shaped design and having a central beaded embossed portion (100) which points towards the electric motor (2) and in the region of which the electric motor (2) is connected to the intermediate flange (94) via the additional screw-connector elements (98).

22. Arrangement according to one of Claims 1 to 21, the damper element (8) consisting of a material with a Shore hardness of approximately 35, specifically, in particular, of silicone or a silicone compound.

## Revendications

1. Agencement pour le maintien avec amortissement des vibrations d'un moteur électrique (2) sur un support (4), par l'intermédiaire d'un élément amortisseur élastique (8), cet élément (8) ayant sensiblement la forme d'un disque et étant agencé centralement par rapport à l'axe du moteur (36), cet élément étant d'une part relié au moteur électrique (2) par au moins trois raccords à vis (38) du moteur répartis sur la circonférence du disque et traversant l'élément amortisseur (8), et d'autre part, au support (4) par des raccords à vis (40) du support agencés dans la direction circonférentielle entre les raccords à vis (38) du moteur et traversant l'élément amortisseur (8), un anneau de bride (46) en une matière rigide de forme stable étant disposé sur la face de l'élément amortisseur (8) opposée au support (4), l'anneau de bride étant relié, ensemble avec l'élément amortisseur (8), au support (4) au moyen des raccords à vis (40) de ce dernier, de manière à ce que l'élément amortisseur (8) en forme de disque soit serré entre le support (4) et l'anneau de bride (46).

2. Agencement selon la revendication 1,
dans lequel le moteur électrique (2) est un moteur ventilé, et le support (4) est formé par une paroi (6) du boîtier du ventilateur.

3. Agencement selon la revendication 1 ou 2,
dans lequel l'élément amortisseur (8) est serré entre le support (4) et l'anneau de bride (46) dans la région de sa périphérie externe, et de préférence sur toute sa périphérie.

4. Agencement selon l'une des revendications 1 à 3,
dans lequel l'élément amortisseur (8) présente sur son côté en regard du support (4) une surface (48) définissant un plan (50) d'application du support.

5. Agencement selon l'une des revendications 1 à 4,
dans lequel l'élément amortisseur (8) présente sur son côté en regard du moteur électrique (2) des régions de surface (52) qui définissent un plan (54) de liaison du moteur.

6. Agencement selon l'une des revendications 1 à 5,
dans lequel l'élément amortisseur (8) présente un plan d'application (56) pour l'anneau de bride (46), ce plan étant décalé d'une distance axiale (A) dans la direction du support par rapport au plan de liaison du moteur (54).

7. Agencement selon l'une des revendications 1 à 6,
dans lequel l'anneau de bride (46) présente dans la région de chaque raccord à vis (40) du support, une patte de fixation (58) orientée vers l'intérieur, les pattes de fixation (58) et l'élément amortisseur (8) comportant des trous traversants alignés (60, 44) pour les raccords à vis (40) du support.

8. Agencement selon la revendication 7,
dans lequel l'élément amortisseur (8) présente un évidement de réception (62) pour chaque patte de fixation (58) de l'anneau de bride (46), chaque patte de fixation (58) étant coudée depuis le plan d'application (56) de l'anneau de bride (46), dans la direction du support, vers le plan de l'évidement de réception (62).

9. Agencement selon l'une des revendications 1 à 8,
dans lequel l'élément amortisseur (8) présente un trou traversant (42) pour chaque raccord à vis (38) du moteur, et dans la région de chaque trou traversant (42) d'une part, sur le côté en regard du support (4), un évidement axial (64), et d'autre part, sur le côté en regard du moteur électrique (2), un prolongement en forme de manchon (66) qui entoure le trou traversant (42), les prolongements en forme de manchon (66) définissant par leurs faces frontales annulaires (68) le plan de liaison (54) du moteur.

10. Agencement selon la revendication 9,
dans lequel chacun des évidements (64) côté support présente un diamètre interne dégagé supérieur au diamètre externe du prolongement en forme de manchon (66) associé côté moteur, de manière à ce que le prolongement en forme de manchon (66) soit relié au reste de l'élément amortisseur (8) par une nervure de liaison (74) en forme de membrane.

11. Agencement selon la revendication 10,
dans lequel un deuxième prolongement en forme de manchon (76) est formé à l'intérieur de chaque évidement (64) côté support, ce prolongement s'étendant à partir de la nervure de liaison en forme de membrane (74) dans la direction du support, et étant de préférence aligné dans la direction axiale avec le premier prolongement en forme de manchon (66) côté moteur, un évidement circonférentiel en forme de rainure (78) étant formé entre l'évidement (64) et le deuxième prolongement (76).

12. Agencement selon l'une des revendications 1 à 11,
dans lequel un insert indéformable en forme de manchon (80) est placé dans les trous passants (42) pour les raccords à vis (38) du moteur.

13. Agencement selon l'une des revendications 1 à 12,
dans lequel l'élément amortisseur (8) présente sur son côté en regard du moteur électrique (2) une nervure d'appui annulaire (82) entourant concentriquement l'axe du moteur (36) pour être appliquée sur celui-ci.

14. Agencement selon l'une des revendications 1 à 13,
dans lequel l'élément amortisseur (8) a la forme d'un disque circulaire et comporte une ouverture centrale (35), en particulier circulaire pour le passage d'un arbre de moteur (14).

15. Agencement selon l'une des revendications 1 à 14,
dans lequel sont prévus quatre raccords à vis (38) du moteur répartis uniformément dans la direction circonférentielle.

16. Agencement selon l'une des revendications 1 à 15,
dans lequel quatre raccords à vis (40) du support sont prévus répartis uniformément dans la direction circonférientielle, chaque raccord à vis (40) du support étant de préférence agencé centralement entre deux raccords à vis (38) du moteur lorsqu'on regarde dans la direction circonférentielle.

17. Agencement selon l'une des revendications 1 à 16,
dans lequel chaque raccord à vis (38) du moteur est formé par une vis (84) dont la tête (70) est de préférence disposée avec interposition d'une rondelle (72), à l'intérieur de l'un des évidements (64) côté support, de l'élément amortisseur (8).

18. Agencement selon l'une des revendications 1 à 17,
dans lequel chaque raccord à vis (40) du support est formé par un manchon à taraudage inteme (86), et par une vis (88) qui s'y engage, le manchon à taraudage interne (86) étant de préférence introduit depuis le côté moteur dans les trous traversants alignés (60, 44) de l'anneau de bride (46) et de l'élément amortisseur (8), et s'appuyant par une tête (90) sur l'anneau de bride (46) pour résister à la rotation, la vis (88) qui traverse une ouverture côté support, étant réunie par vissage avec le manchon à taraudage interne (86).

19. Agencement selon l'une des revendications 1 à 18,
dans lequel les raccords à vis (38) du moteur sont reliés directement à une bride (92) du moteur électrique (2), chaque raccord à vis (38) s'engageant en particulier dans un taraudage de la bride moteur (92).

20. Agencement selon l'une des revendications 1 à 18,
dans lequel les raccords à vis (38) du moteur sont reliés indirectement au moteur électrique (2) par une bride intermédiaire (94), chaque raccord à vis (38) s'engageant en particulier dans un alésage taraudé (96) de la bride intermédiaire (94), cette bride (94) étant reliée au moteur (2) par des éléments de raccord à vis supplémentaires (98).

21. Agencement selon la revendication 20,
dans lequel la bride intermédiaire (94) a la forme d'une rondelle avec une moulure centrale (100) orientée vers le moteur électrique (2), le moteur électrique (2) étant relié dans la région de cette moulure à la bride intermédiaire (94) à l'aide d'éléments de raccord à vis supplémentaires (98).

22. Agencement selon l'une des revendications 1 à 21,
dans lequel l'élément amortisseur (8) est réalisé en une matière à dureté shore de 35 environ, en particulier en un silicone ou un alliage contenant du silicone.
